Europäisches Patentamt

European Patent Office

Office européen des brevets

(19)

(11) Veröffentlichungsnummer : **0 392 081 B1**

(12) **EUROPÄISCHE PATENTSCHRIFT**

(45) Veröffentlichungstag der Patentschrift :
**13.05.92 Patentblatt 92/20**

(51) Int. Cl.$^5$ : **G01C 19/72**

(21) Anmeldenummer : **89121105.4**

(22) Anmeldetag : **15.11.89**

(54) **Einrichtung zur Bildung von Differenz und Summe zweier Detektorsignale.**

(30) Priorität : **12.04.89 DE 3912032**

(43) Veröffentlichungstag der Anmeldung :
**17.10.90 Patentblatt 90/42**

(45) Bekanntmachung des Hinweises auf die
Patenterteilung :
**13.05.92 Patentblatt 92/20**

(84) Benannte Vertragsstaaten :
**DE FR GB IT**

(56) Entgegenhaltungen :
**US-A- 4 479 715
LASER UND OPTOELEKTRONIK, Band 21, Nr.
1, 1989, Seiten 57-63; C. WULF-MATHIES:
"Integrierte Optik für FaseroptischeSensoren"/"Integrated optics for Fiberoptical Sensors"**

(56) Entgegenhaltungen :
**APPL. PHYS. LETT., Band 41, Nr. 7, 1. Oktober
1982, Seiten 616-618, American Institute of
Physics, New York, US; K.P. KOO etal.:
"Passive stabilization scheme for fiber interferometers using (3X3) fiber directional couplers"**

(73) Patentinhaber : **Messerschmitt-Bölkow-Blohm
Gesellschaft mit beschränkter Haftung
Robert-Koch-Strasse
W-8012 Ottobrunn (DE)**

(72) Erfinder : **Bühler, Wolfhardt
Feldbergstrasse 84
W-8000 München 82 (DE)**
Erfinder : **Poisel, Hans, Dr.
Neustädter Strasse 6
W-8060 Dachau (DE)**
Erfinder : **Trommer, Gert, Dr.
Connollystrasse 16
W-8000 München 40 (DE)**

EP 0 392 081 B1

## Beschreibung

Die Erfindung bezieht sich auf eine Einrichtung zur Bildung von Differenz und Summe zweier Detektorsignale gemäß dem Gattungsbegriff des Anspruchs 1.

Solche Einrichtungen sind an sich in verschiedenen Ausführungsformen bekannt. Durch die US-Patentschriften 4 440 498, 4 653 917 und 4 479 715 sowie auch durch die Anmelderin selbst sind solche Einrichtungen für Faserkreisel (Sagnac-Interferometer) bekanntgeworden, wobei ein 3x3-Koppler und 2 bzw. 3 Detektoren verwendet werden und Ausgangssignale als Funktion der sogenannten Drehrate erhalten werden. Zum weiteren Stand der Technik wird noch auf den Artikel "Integrierte Optik für Faseroptische Sensoren" aus der Zeitschrift "Laser u.Optoelektronik" 21(I)/1989 hingewiesen.

Alle diese bekannten Ausführungsformen sind jedoch - wie nachstehend erläutert - mit Nachteilen behaftet und erlauben nicht auf einfache Weise einen direkten Zugriff auf die Differenz und die Summe von zwei Signalströmen und sie erfordern unter anderem einen erhöhten Aufwand für die A/D-Wandlung.

Bei kleinen Drehwinkelraten erhalten die beiden Detektoren eines Faserkreisels mit 3x3-Koppler Signale in der Größenordnung von 20 bis 30% des Maximalsignals. Eine genaue Auflösung kleiner Drehraten macht daher eine sehr genaue Messung von kleinen Änderungen, die auf einem hohen Gleichanteil sitzen, erforderlich. Bei einer Digitalisierung muß somit das gesamte Signal mit der Genauigkeit digitalisiert werden, mit der das kleine Signal bestimmt wird, welches von der Drehung herrührt. Dadurch aber ist es erforderlich, daß teuere und hochauflösende Wandler eingesetzt werden müssen. Weiterhin müssen - um die DG-Signale auswerten zu können - die Fotodioden im Kurzschluß betrieben werden, da nur so die Stabilität des Nullpunktes (Linearität) gewährleistet ist.

Der vorliegenden Erfindung liegt die Aufgabe zugrunde, eine Einrichtung der vorgenannten Art zu schaffen, mit der in einfacher und aufwandsarmer Weise ein direkter Zugriff auf Differenz und Summe zweier Signalströme gewährleistet wird.

Diese Aufgabe wird durch die im Anspruch 1 aufgezeigten Maßnahmen gelöst. Weitere Lehren zur Ausgestaltung und Weiterbildung sind in den Unteransprüchen angegeben. In der nachfolgenden Beschreibung ist ein Ausführungsbeispiel erläutert und in der Zeichnung skizziert. Es zeigen:

Fig. 1 ein Schaltbild einer Ausführungsform der Erfindung,

Fig. 2 ein Schemabild bezüglich des Signalverlaufs von Ausgangssignalen als Funktion der Drehrate.

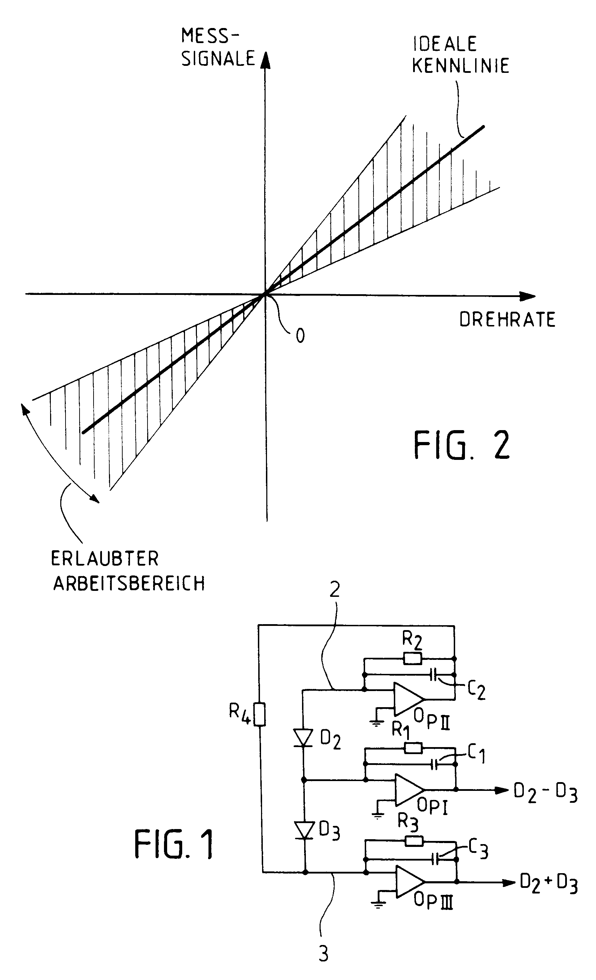

Zur Erfüllung der gestellten Forderungen und der Lösung der vorgenannten Probleme und daß bei einer Drehwinkelrate von Null das Meßsignal hochgenau ist, während es bei höheren Drehwinkelraten innerhalb der in Fig. 2 strichliert gezeichneten Kennlinienfläche liegt, wird nun vorgeschlagen, daß die beiden Detektoren D2 und D3 vor einem Vorverstärker $OP_I$ antiparallel geschaltet werden und so die jeweiligen Fotoströme direkt subtrahiert werden, wobei die Fehlerbeträge der Verstärkungsstufe nicht eingehen. Damit hat man den hohen Gleichanteil der Fotoströme weggebracht und kann nun den Differenzbetrag mit vertretbarem Aufwand digitalisieren, aber man "verschenkt" hierbei auch die Hälfte der von zwei Signalen vorhandenen Information.

Um nun auch die volle Information - beispielsweise als Summe und Differenz beider Signale - zu erhalten wird vorgeschlagen, die Detektoren D2 und D3 an ihren Enden 2 bzw. 3 durch die Operationsverstärker $OP_{II}$ und $OP_{III}$ virtuell auf Masse kurzzuschließen. Dadurch wird am Ausgang des Operationsverstärkers $OP_I$ die Differenz von D2 und D3 erhalten. Dann wird das Signal des Detektors D2 im Operationsverstärker $OP_{II}$ invertiert und am Eingang des Operationsverstärkers $OP_{III}$ dem Signal des Detektors 3 überlagert. Das heißt, mit Hilfe der Operationsverstärker $OP_{II}$ und $OP_{III}$ erfolgt die Summenbildung, indem das verstärkte Signal von $OP_{II}$ über den Widerstand R4 dem $OP_{III}$ zugeführt wird. Hierbei gilt für die in der vorgeschlagenen Einrichtung verwendeten und den Operationsverstärkern $OP_{II}$ und $Op_{III}$ zugeordneten Widerstände, daß $R_4 = R_2 = R_3$ ist.

Damit ist eine Einrichtung der eingangs genannten Art geschaffen worden, die einen deutlich minimierten Aufwand bei der Digitalisierung durch Eliminierung des hohen Offsets mittels direkter Subtraktion der Detektorströme gewährleistet. Die bisher beim Stand der Technik auftretenden Fehler werden durch diese Einrichtung nahe Null geführt, da alle zusätzlichen Fehlerquellen, wie beispielsweise unterschiedliche Vorverstärkung, nunmehr entfallen. Der direkte Erhalt der vollständigen Information beider Signale für Differenz und Summe der beiden Detektoren D2 und D3 ist als weiterer Gewinn gegeben.

## Patentansprüche

1. Einrichtung zur Bildung von Differenz und Summe zweier Detektorsignale beispielsweise für eine Signalauswertung von elektrischen Meßsignalen, die einer Analog/Digital-Wandlung unterzogen werden, **dadurch gekennzeichnet**, daß jeweils ein Ansgang zweier antiparallel geschaltete Zweipoliger Detektoren (D2, D3) mit einem Eingang eines ersten Operationsverstärkers ($OP_I$) zur Differenzbildung verbunden sind und die anderen Ansgänge (2,3) der Detektoren ( D2, D3) mit Eingängen eines zweiten und dritten Operationsverstärkers (OP$_{II}$ bzw. OP$_{III}$) verbunden und mittels dieser virtuell auf Masse kurzgeschlossen sind und daß durch den zweiten und dritten Operationsverstärker (OP$_{II}$ und OP$_{III}$) die Summenbildung erfolgt, indem das verstärkte Signal des zweiten Operationsverstärkers (OP$_{II}$) über einen Widerstand (R$_4$) dem Eingang des dritten Operationsverstärker (OP$_{III}$) zugeführt wird.

## Claims

1. Device for forming a difference and sum of two detector signals, for example for signal evaluation of electrical measuring signals which are subjected to an analog/digital conversion, characterised in that a respective output of two anti-parallel switched bipolar detectors (D2, D3) is connected to an input of a first operational amplifier (OP$_I$) for forming a difference, and the other ouputs (2, 3) of the detectors (D2, D3) are connected to, and shortened to ground by, inputs of a second and third operational amplifier (OP$_{II}$ or OP$_{III}$, and that the sum is formed by the second and third operational amplifier (OP$_{II}$ and OP$_{III}$) in that the amplifed signal of the second operational amplifier (OP$_{II}$) is delivered via a resistor (R$_4$) to the input of the third operational amplifier (OP$_{III}$).

## Revendications

1. Dispositif pour la formation de la différence et de la somme de deux signaux de détecteurs, par exemple pour une exploitation de signaux de mesure électriques qui sont soumis à une conversion analogique/numérique, caractérisé en ce que chaque fois une sortie de détecteurs bipolaires (D2, D3) montés en circuit antiparallèle est reliée à une entrée d'un premier amplificateur opérationnel (OP$_I$) pour la formation de la différence et les autres sorties (2, 3) des détecteurs (D2, D3) sont reliées aux entrées d'un deuxième et d'un troisième amplificateurs opérationnels (OP$_{II}$, OP$_{III}$) et sont court-circuitées virtuellement à la masse par l'intermédiaire de ceux-ci et en ce que la formation de la somme est opéré par les deuxième et troisième amplificateurs opérationnels (OP$_{II}$, OP$_{III}$) en amenant le signal amplifié du deuxième amplificateur opérationnel (OP$_{II}$) à l'entrée du troisième amplificateur opérationnel (OP$_{III}$) par l'intermédiaire d'une résistance (R$_4$).

FIG. 2

FIG. 1